# EUROPÄISCHE PATENTSCHRIFT

(11) **EP 0 321 674 B1**
(45) Veröffentlichungstag und Bekanntmachung des Hinweises auf die Patenterteilung: **05.05.1993**
(21) Anmeldenummer: 88117632.5
(22) Anmeldetag: 22.10.1988
(51) Int. Cl.: B60R 13/08, B60N 3/04

(54) **Fussraumauskleidungsteil zum Einbau in Kraftfahrzeuge**
Floor mat for motor vehicles
Revêtement de plancher pour véhicules

(30) Priorität: 22.12.1987 DE 3743509
(43) Veröffentlichungstag der Anmeldung: 28.06.1989
(73) Patentinhaber: Pelzer, Helmut, 58313 Herdecke (DE)
(72) Erfinder: Pelzer, Helmut, 58313 Herdecke (DE)
(74) Vertreter: Schneider, Wilhelm, Dipl.-Phys.

(56) Entgegenhaltungen:
- DE-A- 3 244 161
- FR-A- 725 358
- US-A- 2 208 630
- US-A- 4 411 944

## Beschreibung

Die Erfindung betrifft ein Fußraumauskleidungsteil zum Einbau in Kraftfahrzeuge, bestehend aus einem flächigen, vorgeformten Polyurethan-Formteil.

Derartige Auskleidungsteile sind bekannt. Dabei ist bei solchen Auskleidungsteilen nachteilig, daß sie zwar relativ maßgenau angefertigt werden können, jedoch der Einbauort im Kraftfahrzeug, beispielsweise der Boden eines Kraftfahrzeuges, üblicherweise durchaus erhebliche Toleranzen aufweist, sodaß eine dichte Anlage in den Randbereichen oder auch an Durchbrüchen oder dergleichen nicht erreicht werden kann.

Da aber solche Formteile auch wesentlich zur Geräuschdämmung und Absorption herangezogen werden, ist eine derartige Spaltbildung aufgrund der Einbautoleranzen nachteilig. Die Schalldämm- bzw. Absorptionswirkung wird hierdurch in erheblichem Maße unzumutbar gemindert.

Ausgehend von diesem Stand der Technik liegt der Erfindung die Aufgabe zugrunde, ein Auskleidungsteil der eingangs beschriebenen Art zu schaffen, welches auch bei vorhandenen Einbautoleranzen unter Vermeidung von Spalt- und Fugenbildungen verlegt werden kann.

Gemäß der Erfindung wird diese Aufgabe dadurch gelöst, daß an das Formteil randseitig und, gegebenenfalls, auch an den Ausschnitten desselben eine über den entsprechenden Rand vorstehende Dichtlippe aus gleichem Werkstoff angeformt ist, und
daß die Dichtlippe durch eine Einlage verstärkt ist, die bis in das Formteil hineinreicht und vom Material des Formteils umhüllt ist.

Durch die an das Formteil angeformte Dichtlippe wird die erwünschte Einbaumaßtoleranz erfüllt, da die Dichtlippe sich je nach Untermaß des Einbauortes entsprechend an die Randkante oder auch an die durchführten Bauteile anlagen kann, sodaß die unerwünschte Spaltbildung vermieden wird. Da aber das Polyurethanschaummaterial insbesondere dann, wenn es relativ dünn in Form einer Dichtlippe ausgebildet ist, sehr leicht vom Formteil abgerissen werden kann, ist in die Dichtlippe eine Einlage eingeformt, die mehr oder weniger weit in das Formteil hineinreicht. Auf diese Weise ist die Dichtlippe in ihrer Funktion nicht behindert, während andererseits sichergestellt ist, daß bei üblicher Benutzung die Dichtlippe nicht von dem Formteil abgerissen wird.

In Weiterbildung schlägt die Erfindung vor, daß die Einlage aus mindestens einem folgender Materialien besteht:
Glasfaser, thermoplastische Faser, Jute.

Bevorzugt sind dabei Glasfasermaterial oder thermoplastisches Fasermaterial. Es können auch Gemische aus unterschiedlichen Materialien als Werkstoff für die Einlage verwendet werden.

Desweiteren schlägt die Erfindung vor, daß die Einlage mindestens in einer folgenden Art ausgebildet ist: als Gelege, Gewirke, Gewebe, Gespinst.

Schließlich kann auch vorteilhaft sein, wenn die Einlage aus mehreren Lagen von Fasern bzw. Fasergebilden besteht.

Unter Umständen kann es auch vorteilhaft sein, wenn die einlage ganzflächig durch das Formteil verlaufend ausgebildet ist.

Es ist besonders vorteilhaft und bevorzugt, wenn die Dichtlippe gegenüber der Formteilebene gekrümmt geformt ausläuft. Durch die gekrümmte Ausbildung ist die Anpassung beim Einbau des Auskleidungsteiles in das Kraftfahrzeug besonders gut ermöglicht, wobei durch die Krümmung jeweils eine gute Anpassung an die seitlichen Anlageflächen des Einbauortes erreicht ist. Bevorzugt ist dabei vorgesehen, daß das freie Ende der Krümmung der Dichtlippe über die Anlagefläche des Formteiles vorragt. Diese bei frei angeordneter Auskleidung vorragende Dichtlippenanordnung führt dazu, daß die Dichtlippe beim Anlegen oder Auflegen auf Karosserieteile des Kraftfahrzeuges unter gewisser elastischer Verformung bis in die Ebene der Anlagefläche zurückgedrängt wird, sodaß die Dichtwirkung noch verbessert ist.

Zwei Ausführungsbeispiele der Erfindung sind in den Figuren schematisch dargestellt und im folgenden näher beschrieben:
Es zeigt:
- Figur 1: eine erste Ausführungsform eines Auskleidungsteiles im Schnitt;
- Figur 2: eine zweite Ausführungsform als ausschnittsweise Darstellung.

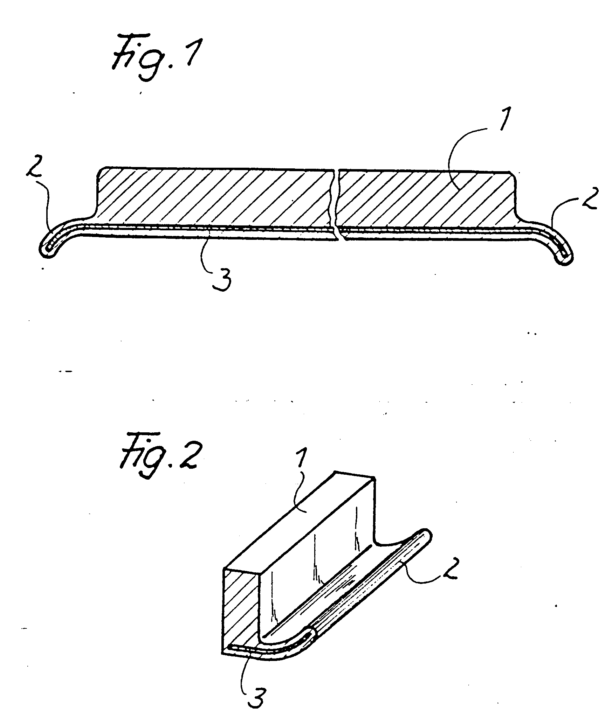

Das insbesondere zur Fußraumauskleidung dienende Auskleidungsteil besteht aus einem flächigen, gegebenenfalls auch vorgeformten Polyurethan-Formteil 1 welches randseitig und gegebenenfalls auch an Ausschnitten eine über den entsprechenden Rand nach relativ außen vorstehende Dichtlippe 2 aus gleichem Werkstoff angeformt ist. das Formteil wird einschließlich der Dichtlippe in einem Arbeitsgang erzeugt. Die Dichtlippe 2 ist durch eine Einlage 3 verstärkt, die bis in das Formteil 1 hineinreichen oder sogar, wie aus Figur 1 ersichtlich, durch das gesamte Formteil hindurchläuft. Die Einlage 3 kann beispielsweise aus Fasermaterial, zum Beispiel Glasfaser, thermoplastischer Faser oder auch Jutefasern bestehen. Sie kann auch durch einzelne nebeneinander angeordnete Fasern gebildet sein oder aber auch durch Gelege, Gewirke, Gewebe, Gespinste oder dergleichen. Bei beiden Ausführungsformen ist die Dichtlippe 2 gegenüber der Formteilebene 1 gekrümmt geformt. Beim Ausführungsbeispiel nach Figur 1 verläuft die Krümmung relativ nach unten vom Formteil 1 weg, sodaß beim Auflegen des Formteiles 1 auf einen entsprechenden Untergrund die Dichtlippe 2 unter der ihr eigenen Federelastizität (wesentlich bedingt durch die Einlage) in die Ebene des Formteiles zurückgedrängt wird.

Bei der Ausführungsform nach Figur 2 ist die Dichtlippe 2 entgegengesetzt gekrümmt, sodaß beim Auflegen des Formteiles auf einen entsprechenden Untergrund je nach Einbaumaß die Dichtlippe 2 mehr oder weniger in der Zeichnungsrichtung nach oben verformt ist. Auf diese Weise ist eine besonders gute Anpassung an den Einbauort möglich.

## Patentansprüche

1. Fußraumauskleidungsteil zum Einbau in Kraftfahrzeuge, bestehend aus einem flächigen, vorgeformten Polyurethan-Formteil,
**dadurch gekennzeichnet**,
daß an das Formteil (1) randseitig und gegebenenfalls auch an Ausschnitten desselben eine über den entsprechenden Rand vorstehende Dichtlippe (2) aus gleichem Werkstoff angeformt ist, und
daß die Dichtlippe (2) durch eine Einlage (3) verstärkt ist, die bis in das Formteil hineinreicht und vom Material des Formteils (1) umhüllt ist.

2. Auskleidungsteil nach Anspruch 1,
**dadurch gekennzeichnet**,
daß die Einlage (3) aus mindestens einem folgenden Material besteht:
Glasfaser, thermoplastische Faser, Jute.

3. Auskleidungsteil nach Anspruch 1 oder 2,
**dadurch gekennzeichnet**,
daß die Einlage (3) mindestens in einer folgenden Art ausgebildet ist:
als Gelege, Gewirke, Gewebe, Gespinst.

4. Auskleidungsteil nach Anspruch 1 oder einem der folgenden,
**dadurch gekennzeichnet**,
daß die Einlage (3) aus mehreren Lagen von Fasern bzw. Fasergebilden besteht.

5. Auskleidungsteil nach einem der Ansprüche 1 bis 4,
**dadurch gekennzeichnet**,
daß die Einlage (3) ganzflächig durch das Formteil (1) verlaufend ausgebildet ist.

6. Auskleidungsteil nach einem der Ansprüche 1 bis 5
**dadurch gekennzeichnet**,
daß die Dichtlippe (2) gegenüber der Formteilebene gekrümmt geformt ausläuft.

7. Auskleidungsteil nach einem der Ansprüche 1 bis 6
**dadurch gekennzeichnet**,
daß das freie Ende der Krümmung der Dichtlippe (2) über die Anlagefläche des Formteiles (1) vorragt.

## Claims

1. Footroom lining part for incorporation in motor vehicles, comprising a two-dimensional, preformed polyurethane moulded part, characterised in that a sealing lip (2) composed of the same material and projecting over the corresponding edge is moulded onto the moulded part (1) at the peripheral side, and if necessary, also at cutouts in the same, and in that the sealing lip (2) is reinforced by an inlay (3) which extends into the moulded part and is enveloped by the material of the moulded part (1).

2. Lining part according to Claim 1, characterised in that the inlay (3) is composed of at least one of the following materials: glass fibre, thermoplastic fibre, jute.

3. Lining part according to Claim 1 or 2, characterised in that the inlay (3) is constructed in at least one of the following manners: as a laid, knitted, woven or spun fabric.

4. Lining part according to Claim 1 or one of the subsequent claims, characterised in that the inlay (3) is composed of a plurality of layers of fibres or fibre sheets.

5. Lining part according to one of Claims 1 to 4, characterised in that the inlay (3) is constructed to extend through the moulded part (1) over the entire area.

6. Lining part according to one of Claims 1 to 5, characterised in that the sealing lip (2) extends in a curved shape with respect to the plane of the moulded part.

7. Lining part according to one of Claims 1 to 6, characterised in that the free end of the curve of the sealing lip (2) projects over the contact surface of the moulded part (1).

## Revendications

1. Elément de revêtement de plancher de véhicules automobiles, se composant d'une pièce de forme en polyuréthane plate et préformée, caractérisée en ce que le long du bord de la pièce de forme (1) et, le cas échéant également le long de découpures de cette dernière, une lèvre d'étanchéité (2) dépassant le bord correspondant est réalisée par formage à partir du même matériau, cette lèvre d'étanchéité (2) étant renforcée par un insert (3) s'étendant à l'intérieuer de la pièce de forme dont le matériau constitue ainsi l'enveloppe de l'insert.

2. Revêtement selon la revendication 1, caractérisé en ce que l'insert (3) se compose d'au moins l'un des matériaux suivants : fibre de verre, fibre thermoplastique, jute.

3. Revêtement selon la revendication 1 ou 2, caractérisé en ce que les inserts sont réalisèe au moins sous l'une des formes suivantes : nappe, tricot, tissu, filet.

4. Revêtement selon la revendication 1 ou l'une des revendications suivantes, caractérisé en ce que l'insert (3) se compose de plusieurs couches de fibres ou de produit fibreux.

5. Revêtement selon l'une des revenducations 1 à 4, caractérisé en ce que l'insert (3) est un élément entièrement plat noyé dans la pièce de forme (1).

6. Revêtement selon l'une des revendications 1 à 5, caracterisé en ce que la lèvre d'étanchéité (2) présente une forme recourbée par rapport au plan de la pièce de forme.

7. Revêtement selon l'une des revendications 1 à 6, caractérisé en ce que l'extrémité libre de la partie recourbée de la lèvre d'étanchéité (2) est relevée par rapport à la surface d'appui de la pièce de forme (1).
